(19) Europäisches Patentamt
European Patent Office
Office européen des brevets

(11) Veröffentlichungsnummer: **0 105 057**
**B1**

(12) **EUROPÄISCHE PATENTSCHRIFT**

(45) Veröffentlichungstag der Patentschrift: **01.04.87**

(51) Int. Cl.⁴: **C 08 F 2/44**, C 12 N 11/08, G 01 N 33/533

(21) Anmeldenummer: **82109171.7**

(22) Anmeldetag: **05.10.82**

(54) **Verfahren zur Herstellung von reaktiven hydrophilen, mit Farbstoffen oder fluoreszierenden Verbindungen markierten Latexpartikeln.**

(43) Veröffentlichungstag der Anmeldung:
**11.04.84 Patentblatt 84/15**

(45) Bekanntmachung des Hinweises auf die Patenterteilung:
**01.04.87 Patentblatt 87/14**

(84) Benannte Vertragsstaaten:
**AT BE CH DE FR GB IT LI LU NL SE**

(56) Entgegenhaltungen:
**EP - A - 0 054 249**
**EP - A - 0 054 685**
**DE - C - 735 284**

(73) Patentinhaber: **Tschechoslowakische Akademie der Wissenschaften, Narodni 3, CS-11142 Prag (CS)**

(72) Erfinder: **Svec, Frantisek, Dr., Pricna 26, CS-273 43 Hrebec (CS)**
Erfinder: **Bouchal, Karel, Dr., Belojanisova 6, CS-150 00 Prag 5 (CS)**
Erfinder: **Kalal, Jaroslav, Prof. Dr., Belohorska 135, CS-160 00 Prag 6 (CS)**
Erfinder: **Labsky, Jiri, Dr., na vypichu 1956/28, CS-162 00 Prag 6 (CS)**
Erfinder: **Jurkova, Eva, Dr., Jeremenkova 62, CS-147 00 Prag 4 (CS)**

(74) Vertreter: **Daum, Martin, Dr. et al, Boehringer Mannheim GmbH Postfach 31 01 20, D-6800 Mannheim 31 (DE)**

**EP 0 105 057 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von reaktiven hydrophilen, mit Farbstoffen oder fluoreszierenden Verbindungen markierten Latexpartikeln, das wenig anspruchsvoll und einfach durchzuführen ist. Eingebaute Farbstoffe oder fluoreszierende Verbindungen enthaltende Partikel sind zum Beispiel in der Immunologie sehr wichtig; weil sie sich zum Nachweis von Antigenen bzw. Antikörpern in menschlichen oder tierischen Geweben eignen. Besonders vorteilhaft eignet sich diese Nachweismethode zur Herstellung von Gewebeschnitten in der Histologie. Ein andere Verwendung besteht in einer selektiven Markierung der Zellen, die an der Oberfläche definierte Rezeptoren tragen.

Die Latexpartikel werden in bekannter Weise durch eine radikalische Emulsionspolymerisation hergestellt. Ein in Wasser schwer lösliches Monomer wird dabei mit einer wässrigen Lösung eines Emulgators verrührt, wobei eine milchähnliche Emulsion entsteht. Durch Zugabe eines wasserlöslichen radikalischen Initiators wird bei entsprechender Temperatur eine Polymerisation ausgelöst. Der entstehende Latex ist in Anwesenheit eines Emulgators sehr stabil, da jedes Partikel mit einer Schicht von ionisierten Seifenmolekülen umhüllt und damit gegen eine Koagulation geschützt wird. Die umhüllende Schicht verursacht aber, dass die Oberfläche der Latexteilchen ganz andere Eigenschaften als das eigentliche Polymer hat.

Der Nachteil der klassischen Systeme wird teilweise durch die sog. emulgatorfreie Emulsionspolymerisation vermieden. Sie führt auch zu einem Latex, der keinen Emulgator enthält und dadurch wesentlich sauberer ist. So werden zum Beispiel Latices aus Polytetrafluoroethylen, Polystyrol, Polyvinylacetat, Polycarboxystyrol hergestellt. Stabile Latices entstehen insbesondere bei der Polymerisation der ionogenen Monomeren, wobei die ionogenen Gruppen an der Partikeloberfläche so angeordnet sind, dass sie die Rolle des Emulgators übernehmen.

Für immunologische Zwecke sind aber die o.g. Monomeren nicht besonders geeignet, weil die Einführung von aktiven Gruppen, die eine Kopplung mit einem biologisch und/oder immunologisch aktiven Stoff ermöglichen, aufwendig und schwierig ist. Es wurden daher hydrophile Latexpartikel gemäss der Europäischen Offenlegungsschrift 54685 entwickelt, die fähig sind, auf einfache Weise biologisch und/oder immunologisch aktive Proteine zu binden, ohne dass dabei die Struktur des gebundenen Stoffes und die Stabilität des Latex zerstört wird. Die hydrophilen Latexpartikel werden durch eine Emulsionspolymerisation erhalten, bei der eine Epoxygruppe enthaltende Monomere gegebenenfalls in Kombination mit anderen die Partikeleigenschaften in gewünschter Weise beeinflussenden Monomeren in Anwesenheit eines wasserlöslichen Initiators jedoch ohne Zusatz eines Emulgators oder Stabilisators polymerisiert werden. Als die Partikeleigenschaften beeinflussende zusätzliche Monomere können beispielsweise monomere, polymerisierbare Derivate von Farbstoffen oder fluoreszierenden Verbindungen benutzt werden. Dabei werden mit Fabrstoffen oder fluoreszierenden Verbindungen markierte hydrophile Latexpartikel erhalten.

Eine andere Möglichkeit zur Herstellung von farbigen bzw. fluoreszierenden Latexpartikeln für die Anwendung in der Immunologie besteht darin, schon fertige Latexpartikel mit reaktiven Derivaten von Fabrstoffen oder fluoreszierenden Verbindungen umzusetzen, wie dies in der US-PS 4 108 972 beschrieben wird.

Beide o.g. Verfahren haben einen gemeinsamen Nachteil: Es ist unbedingt nötig, ein reaktives Derivat des Farbstoffs oder der fluoreszierenden Verbindungen durch eine manchmal mühsame Methode zu synthetisieren. Im Verfahren gemäss US-PS 4 108 972 kommt noch hinzu, dass die Reaktion der reaktiven Derivate vom Farbstoff oder fluoreszierenden Verbindung fast ausschliesslich an der Oberfläche der Partikel stattfindet, d.h. mit der reaktiven Gruppe des Partikels, die ursprünglich für die Kopplung mit dem biologisch und/oder immunologisch aktiven Stoff vorgesehen war. Besonders nachteilig wirkt sich aus, dass die reaktivsten und am leichtesten zugänglichen Gruppen als erstes mit dem Fabrstoff bzw. der fluoreszierenden Verbindung reagieren, so dass für die anspruchsvollere Kopplung mit den biologisch und/oder immunologisch aktiven Proteinen nur die weniger reaktiven und schlechter erreichbaren Gruppen übrigbleiben. Darüberhinaus ist bei einem hohen Substitutionsgrad der für die Kopplung zur Verfügung stehende freie Teil der Oberfläche stark reduziert. Der Vorteil der emulgatorfreien Emulsionspolymerisation geht damit verloren.

Die o.g. Nachteile der bekannten Verfahren zur Herstellung von reaktiven hydrophilen Latexpartikeln, die mit einem Fabrstoff oder mit einer fluoreszierenden Verbindung markiert sind, werden gemäss dem erfindungsgemässen Verfahren vermieden. Gemäss der Erfindung wird das Verfahren zur Herstellung der reaktiven hydrophilen, mit einem Farbstoff oder fluoreszierenden Verbindung markierten Latexpartikel dadurch gekennzeichnet, dass man ein in Wasser schwerlösliches Monomer oder ein Gemisch von verschiedenen in Wasser schwerlöslichen Monomeren in Gegenwart eines Farbstoffes oder einer fluoreszierenden Verbindung, die keine co-polymerisierbaren Gruppen tragen, polymerisiert oder copolymerisiert. Die Polymerisation wird in einer Wasserdispersion unter Ausschluss von Sauerstoff mit Hilfe eines wasserlöslichen radikalbildenden Initiators, jedoch ohne Zusatz eines Emulgators oder Stabilisators nach dem Emulsionsverfahren durchgeführt.

Als in Wasser schwerlösliche Monomere werden vorteilhafterweise Epoxide benutzt, die im Molekül mindestens eine polymerisierbare C=C-Doppelbindung enthalten. Bevorzugt sind Epoxyalkylenverbindungen, Glycidylester oder Glycidylether, beispielsweise Glycidylacrylat, Glycidylmethacrylat, Glycidylvinylether, Glycidylvinylphthalat, 3,4-Epoxybuten-1. In dem erfindungsgemässen Verfahren kann ein bestimmtes Epoxymonomere oder auch ein Gemisch von verschiedenen Epoxymonomeren benutzt werden. Die Konzentration des Epoxids in der Monomerenphase kann 1 bis 100 Gew.% betragen.

Der Gehalt an Epoxygruppen sowie auch die anderen chemischen und physikalischen Eigenschaften können vorteilhafterweise durch Zusatz von anderen Monomeren, wie beispielsweise Styrol, Diene, Acrylamide, Methacrylamide, Alkyl-, Hydroxyalkyl- und Aminoalkylacrylate oder -methacrylate, Vinylether, Vinylester, N-Vinylpyrrolidon, Methacryl- oder Acrylaldehyd, gesteuert werden.

In manchen Fällen, insbesondere in Anwesenheit stark hydrophiler Comonomerer, ist es erforderlich, die Löslichkeit der entstehenden Latexpartikel in Wasser oder organischen Lösungsmitteln zu verringern. Dies kann erreicht werden, indem dem Polymerisationsgemisch übliche divinylische Vernetzungsmittel, beispielsweise Alkylen- oder Hydroxyalkylenacrylate oder -methacrylate, Alkylenbisacryl- oder methacrylamide, Divinylbenzol, zugegeben werden.

Farbstoffe und fluoreszierende Verbindungen werden dem Polymerisationsgemisch vorteilhafterweise in einer Menge von 0,05 - 1 Gew.% zugesetzt. Erfindungsgemäss besonders geeignet sind: Fluoreszein, Rosamin, Rhodamin, Cumarin, Acridin und ähnliche Verbindungen.

Als Initiator kann jeder üblicherweise für die Emulsionspolymerisation verwendete wasserlösliche Initiator eingesetzt werden. Erfindungsgemäss werden vorzugsweise Peroxodisulfate, Peroxoborate, Wasserstoffperoxid oder ionogene 2,2'-Azodiisobutyronitrilderivate in einer Konzentration zwischen 0,5 - 1,5 g/l eingesetzt.

Das erfindungsgemässe Verfahren zur Herstellung von reaktiven hydrophilen, mit Fabrstoff oder fluoreszierenden Verbindungen markierten Latexpartikeln ist gegenüber Luftsauerstoff sehr empfindlich. Der Sauerstoff muss deshalb sehr sorgfältig aus allen Polymerisationskomponenten und Gefässen durch gründliches Auskochen, durch Destillation unter Inertgasatmosphäre oder durch Durchleiten von Stickstoff, Argon oder einem anderen Inertgas entfernt werden.

Die Polymerisation wird erfindungsgemäss vorzugsweise mit einem Flottenverhältnis, bezogen auf die Volumina, zwischen Wasser- und Monomeren-Phase von 8:1 bis 16:1 durchgeführt. Die Temperatur wird in einem Bereich von 0-80°C, vorzugsweise 60-80°C, und die Reaktionsdauer in einem Bereich von 5-40 Std. gewählt, wobei beide Parameter vom gewählten Initiator abhängig sind.

Die erfindungsgemäss hergestellten reaktiven hydrophilen Latexpartikel sind streng kugelförmig, monodispers verteilte, untereinander annähernd gleich grosse Teilchen mit einem Durchmesser von etwa 0,2-1,5 μm.

Die farbigen bzw. fluoreszierenden Latexpartikel können nach beendeter Emulsionspolymerisation noch Reste nicht auspolymerisierter Monomerer, des Farbstoffs oder der fluoreszierenden Verbindung enthalten, die durch Wasserdampfdestillation, Dialyse oder mehrfaches Zentrifugieren und Dekantieren beseitigt werden können. Der Reinheitsgrad der Latexpartikel kann auf vorteilhafte Weise durch Fluoreszenzuntersuchung des Dialysates oder des Abwassers verfolgt werden.

Der Einbau der Fabrstoffe bzw. der fluoreszierenden Verbindungen kann sowohl in der Wasserphase unter Entstehung von seifenähnlichen, mit fluoreszierendem Molekül terminierten Oligomeren, als auch in der organischen mizellaren Phase stattfinden. Ein Verhältnis der beiden Vorgänge hängt von dem Verteilungskoeffizienten des Farbstoffes bzw. der fluoreszierenden Verbindung zwischen Wasser und der organischen Phase und der Diffusionsgeschwindigkeit zwischen beiden Phasen ab. Die Löslichkeit des Farbstoffs bzw. der fluoreszierenden Verbindung in der einen oder der anderen Phase wird im wesentlichen durch seine chemische Struktur bedingt. Meistens handelt es sich bei den erfindungsgemäss eingesetzten Fabrstoffen bzw. fluoreszierenden Verbindungen um aromatische Substanzen, wie beispielsweise Phenole, die allgemein hohe Übertragungskonstanten ausweisen. Durch einfache chemische Umwandlung können die Löslichkeitsverhältnisse beeinflusst werden. Eine Erhöhung des Zwischenphasentransportes kann schliesslich auch mit einem «Phase-Transfer-Katalysator» erreicht werden.

Die endständigen freien Epoxygruppen des Latex sind hoch reaktiv. Sie können leicht durch an sich bekannte Reaktionen in andere reaktive Gruppen übergeführt werden, die für die Kopplung mit biologisch und/oder immunologisch aktiven Proteinen besser geeignet sind. Bei diesen Umsetzungen gehen die Farb- und Fluoreszenzeigenschaften der Latexpartikel im allgemeinen nicht verloren.

Das erfindungsgemässe Verfahren wird durch die folgenden Beispiele näher erläutert.

Beispiel 1

In 20 g Glycidylmethacrylat werden 10 mg Fluoreszein gelöst und dadurch von Luftsauerstoff befreit, dass Stickstoff hindurchgeleitet wird. In 200 ml ausgekochtem, unter Hindurchleiten von Stickstoff gekühltem, destilliertem Wasser werden 0,4 g 3,3'-Azobis (3-cyanobutannatrium-sulfonan) gelöst. Beide Komponenten werden in einen Glasreaktor gebracht und weitere 10 Minuten mit Stickstoff behandelt. Danach wird der Reaktor geschlossen und die Reaktion unter ständigem Rühren (500 U.p.M.) bei einer Temperatur von 75°C 24 Stunden lang durchgeführt. Nach dieser Zeit beträgt der Umsatz 95%. Das Reaktionsprodukt ist ein Latex aus kugelförmigen, monodispersen Partikeln, die gelb gefärbt sind und im UV-Licht fluoreszieren. Sie weisen einen Durchmesser von 500 nm auf. Das Polymer

enthält 0,05 mg Fluoreszein in 1 g Polyglycidylmethacrylat.

Beispiel 2

Wie in Beispiel 1 beschrieben, werden 200 ml destilliertes Wasser, in dem 0,4 g 3,3′-Azobis(3-cyanobutan-natriumsulfonan) gelöst sind, und 20 g eines Gemisches aus 15 Gew.% Glycidylmethacrylat und 85 Gew.% Styrol, in dem 10 mg Fluoreszein und 20 mg Cetyltrimethylammoniumchlorid gelöst sind, getrennt von Sauerstoff befreit. Nach dem Vermischen wird das Reaktionsgemisch unter ständigem Rühren bei einer Temperatur von 75°C 24 Stunden lang umgesetzt. Die nicht auspolymerisierten Restmonomeren werden durch Wasserdampfdestillation beseitigt. Die entstehenden monodispersen Copolymerpartikel haben einen Durchmesser von 250 nm. Sie zeigen im UV-Licht eine gelbgrüne Fluoreszenz. Die Konzentration von Fluoreszein ist 0,03 mg/g Polymerisat.

Beispiel 3

Wie in Beispiel 1 beschrieben, werden eine Lösung von 0,3 g 3,3′-Azobis (3-cyanobutan-natrium-sulfonan) in 200 ml destilliertem Wasser und 20 g eines Gemisches aus 15 Gew.% Glycidylmethacrylat und 85 Gew.% Vinylacetat, in dem 10 mg Fluoreszein gelöst sind, von Sauerstoff befreit und miteinander umgesetzt. Unter den in Beispiel 1 angegebenen Polymerisationsbedingungen beträgt der Umsatz 80%. Der Latex besteht aus monodispersen kugelförmigen Teilchen mit einem Durchmesser von 200 nm. Der Fluoreszein-Gehalt beträgt 0,02 mg/g Polymer.

Beispiel 4

Wie in Beispiel 1 beschrieben, werden eine Lösung von 0,4 g 3,3′-Azobis(3-cyanobutan-natrium-sulfonan) in 200 ml destilliertem Wasser und 20 g eines Gemisches aus 15 Gew.% Glycidylmethacrylat und 85 Gew.% Isopren zusammen mit 10 mg Fluoreszein und 10 mg Cetyltrimethylammonium-Bromid bei einer Temperatur von 75°C 24 Stunden lang umgesetzt. Der Umsatz beträgt 75%. Die Restmonomeren werden anschliessend durch eine Wasserdampfdestillation entfernt. Der stabile Latex enthält monodispers verteilte, kugelförmige Teilchen mit einem Durchmesser von 250 nm, die eine gelbgrüne Fluoreszenz aufweisen.

Beispiel 5

Wie in Beispiel 1 beschrieben, werden 0,4 g 3,3′-Azobis (3-cyanobutan-natrium-sulfonan) in 200 ml destilliertem Wasser und 20 g Glycidylmethacrylat mit 10 mg Cumarin getrennt vom Sauerstoff befreit. Nach dem Vermischen wird das Reaktionsgemisch unter ständigem Rühren bei einer Temperatur von 75°C 25 Stunden lang polymerisiert. Die Restmonomeren und andere niedermolekulare Stoffe werden durch eine Dialyse entfernt. Der Umsatz beträgt 96%. Der erhaltene Latex besteht aus monodispers verteilten, kugelförmigen Partikeln mit einem Durchmesser von 520 nm, die eine blaue Fluoreszenz im UV Licht aufweisen. Der Gehalt an Cumarin beträgt 0,04 mg/g Polymer.

100 ml dieser Emulsion werden anschliessend mit 100 ml Ammoniaklösung (25%ig) versetzt und 24 Stunden lang bei Zimmertemperatur stehen gelassen. Dabei werden die Epoxygruppen durch Ammonolyse in Aminogruppen übergeführt. Alle anderen Eigenschaften des Latex bleiben erhalten. Der modifizierte Latex enthält 0,03 mg Cumarin/1 g Polymer.

Beispiel 6

Wie im Beispiel 1 beschrieben, werden 0,4 g 3,3′-Azobis(3-cyanobutan-natrium-sulfonan) in 200 ml destilliertem Wasser und 20 g Glycidylmethacrylat mit 1 g Ethylendimethacrylat, 10 mg Rhodamin B und 20 mg Dodecyltrimethylammonium-Chlorid getrennt vom Luftsauerstoff befreit. Nach dem Vermischen wird das Reaktionsgemisch unter ständigem Rühren bei einer Temperatur von 75°C 12 Stunden lang umgesetzt. Der nicht umgesetzte Monomeranteil und andere niedermolekulare Stoffe werden durch eine Druckfiltration entfernt. Der Umsatz beträgt 96%. Die monodispersen und im UV-Licht fluoreszierenden Partikel haben einen Durchmesser von 500 nm. Der Rhodamin B-Gehalt beträgt 0,03 mg/1g Polymer.

100 ml dieser Emulsion werden mit 100 ml 0,05 mol/l Schwefelsäure versetzt und anschliessend 3 Stunden lang auf 80°C erhitzt. Dabei werden die Epoxygruppen zu vicinalen Hydroxygruppen umgesetzt. Die Grösse der Partikel bleibt unverändert. Nach einer Dialyse gegen 1%ige Sodalösung zeigen die Partikel eine Fluoreszenz, die der Konzentration von 0,03 mg Rhodamin B/g Polymer entspricht.

100 ml des hydrolysierten Latex wird danach mit 200 ml 0,1 Mol/1 Periodatlösung 24 Stunden lang bei Zimmertemperatur unter Rühren behandelt. Überschüssige Periodatsäure wird mittels Dialyse entfernt. Mit Hilfe einer Trockenfiltration wird das Volumen auf 100 ml reduziert. Die so erhaltenen Latexpartikel enthalten 4 Gew.% Aldehydgruppen. Die Fluoreszenz entspricht einer Konzentration von 0,01 mg Rhodamin B/1 g Polymer.

Beispiel 7

Wie in Beispiel 1 beschrieben, werden eine Lösung von 0,4 g 3,3′-Azobis(3-cyanobutansulfonsäure) in 300 ml Wasser und 20 g Glycidylmethacrylat mit 0,5 g Divinylbenzol, in dem 15 mg eines Kondensationsproduktes des Cumarins mit Formaldehyd und Dodecylamin gelöst sind, vom Luftsauerstoff befreit. Nach dem Vermischen wird das Reaktionsgemisch bei einer Temperatur von 75°C 24 Stunden lang polymerisiert. Der nichtpolymerisierte Monomeranteil und andere niedermolekulare Stoffe werden durch eine Druckfiltration entfernt. Der Latex enthält monodisperse kugelförmige Teilchen mit einem Durchmesser von 500 nm und zeigt eine blaue Fluoreszenz.

Beispiel

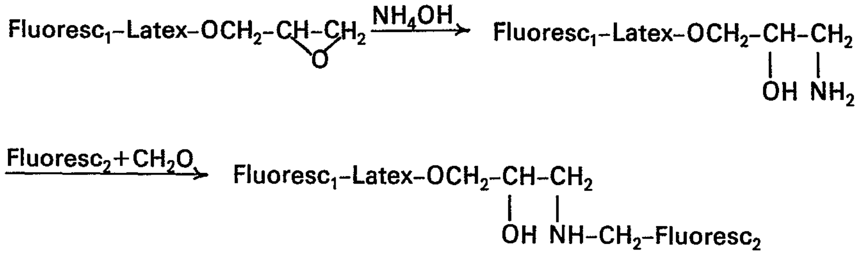


Ein nach Beispiel 1 hergestelltes und 0,05 mg Fluoreszein/g Polymer enthaltendes Latex wird mt einem gleichen Volumen von 15%iger Ammoniaklösung versetzt und bei Zimmertemperatur 24 Stunden lang stehengelassen. Danach wird dialysiert und der pH-Wert auf pH 8 eingestellt. Es werden 10 mg Fluoreszein und 0,5 ml Formaldehyd (37%ig) zugegeben. Unter ständigem Rühren wird das Gemisch weitere 24 Stunden bei Zimmertemperatur gehalten. Danach wird gegen 1%ige Sodalösung dialysiert. Der erhaltene modifizierte Latex besteht aus monodispers verteilten, kugelförmigen Partikeln, mit einem Durchmesser von 500 nm. Er enthält 10 mg Fluoreszein/g Polymer.

## Patentansprüche

1. Verfahren zur Herstellung von reaktiven hydrophilen, mit Farbstoffen oder fluoreszierenden Verbindungen markierten Latexpartikeln, dadurch gekennzeichnet, dass ein in Wasser schwerlösliches Monomer oder verschiedene in Wasser schwerlösliche Monomere mit einem Farbstoff oder einer fluoreszierenden Verbindung, die keine co-polymerisierbaren Gruppen tragen, in Wasser dispergiert und unter Ausschluss von Sauerstoff durch Emulsionspolymerisation in Anwesenheit eines wasserlöslichen, Radikale bildenden Initiators, jedoch ohne Zusatz eines Emulgators oder Stabilisators homo- oder copolymerisiert werden.

2. Verfahren nach Anspruch 1, dadurch gekennzeichnet, dass als in Wasser schwerlösliches Monomer ein mindestens eine (co)polymerisierbare C=C-Doppelbindung enthaltendes Epoxid, gegebenenfalls im Gemisch mit anderen copolymerisierbaren Monomeren verwendet wird.

3. Verfahren nach Anspruch 2, dadurch gekennzeichnet, dass als Epoxid 3,4-Epoxybuten-1, Glycidylvinylether, Glycidylvinylphthalat, Glycidylacrylat oder Glycidylmethacrylat verwendet wird.

4. Verfahren nach einem der Ansprüche 1 bis 3, dadurch gekennzeichnet, dass die Emulsionspolymerisation unter Zusatz eines divinylischen Vernetzungsmittels durchgeführt wird.

5. Verfahren nach einem der Ansprüche 1 bis 4, dadurch gekennzeichnet, dass als Farbstoff oder fluoreszierende Verbindung Fluoreszein, Rosamin, Rhodamin, Cumarin oder Acridin bzw. ein Derivat dieser Verbindungen verwendet wird.

6. Verfahren nach Anspruch 1, dadurch gekennzeichnet, dass der Verteilungskoeffizient und die Diffusionsgeschwindigkeit des Farbstoffs oder der fluoreszierenden Verbindung zwischen wässriger und organischer Phase mittels «Phase-Transfer-Katalysator» geändert wird.

7. Verfahren nach einem der Ansprüche 1 bis 6, dadurch gekennzeichnet, dass die Konzentration des Farbstoffes oder der fluoreszierenden Verbindung 0,05 bis 1 Gew.% beträgt.

8. Verfahren nach einem der Ansprüche 1 bis 7, dadurch gekennzeichnet, dass bei der Emulsionspolymerisation das Flottenverhältnis 8:1 bis 16:1, bezogen auf die Volumina, beträgt.

9. Verfahren nach einem der Ansprüche 1 bis 8, dadurch gekennzeichnet, dass die Initiatorkonzentration 0,5 bis 1,5 g/l beträgt.

10. Verfahren nach einem der Ansprüche 1 bis 9, dadurch gekennzeichnet, dass die Konzentration des Epoxids in der Monomerenphase 1 bis 100 Gew.% beträgt.

11. Verfahren nach einem der Ansprüche 1 bis 10, dadurch gekennzeichnet, dass die Emulsionspolymerisation in dem Temperaturbereich von 0 bis 80°C 5 bis 40 Stunden lang durchgeführt wird.

## Claims

1. Process for the preparation of reactive hydrophilic latex particles labelled with dyestuffs or fluorescing compounds, characterised in that a monomer which is sparingly soluble in water or various monomers which are sparingly soluble in water are dispersed in water with a dyestuff or fluorescing compound which does not contain any co-polymerisable groups and, with the exclusion of oxygen, are homo- or co-polymerised by emulsion polymerisation in the presence of a water-soluble, radical-forming initiator but without the addition of an emulsifier or stabiliser.

2. Process according to claim 1, characterised in that, as monomer which is sparingly soluble in water, there is used an epoxide containing at least one (co)polymerisable C=C double bond, optionally in admixture with other copolymerisable monomers.

3. Process according to claim 2, characterised in that, as epoxide, there is used 3,4-epoxybut-1-ene, glycidyl vinyl ether, glycidyl vinyl phthalate, glycidyl acrylate or glycidyl methacrylate.

4. Process according to one of claims 1 to 3, characterised in that the emulsion polymerisation is carried out with the addition of a divinyl cross-linking agent.

5. Process according to one of claims 1 to 4, characterised in that, as dyestuff or fluorescing compound, there is used fluorescein, rosamine, rhodamine, coumarin or acridine or a derivative of these compounds.

6. Process according to claim 1, characterised in that the partition coefficient and the diffusion velocity of the dyestuff or of the fluorescing compound between aqueous and organic phase is changed by means of "phase transfer catalyst".

7. Process according to one of claims 1 to 6, characterised in that the concentration of the dyestuff or of the fluorescing compound amounts to 0.05 to 1 wt.%.

8. Process according to one of claims 1 to 7, characterised in that, in the case of the emulsion polymerisation, the liquor mixture ratio amounts to 8:1 to 16:1, referred to the volumes.

9. Process according to one of claims 1 to 8, characterised in that the initiator concentration amounts to 0.5 to 1.5 g./l.

10. Process according to one of claims 1 to 9, characterised in that the concentration of the epoxide in the monomer phase amounts to 1 to 100 wt.%.

11. Process according to one of claims 1 to 10, characterised in that the emulsion polymerisation is carried out in the temperature range of from 0 to 80°C. for 5 to 40 hours.

## Revendications

1. Procédé de fabrication de particules de latex réactives hydrophiles marquées avec des colorants ou des composés fluorescents, caractérisé en ce qu'un monomère difficilement soluble dans l'eau ou différents monomères difficilement solubles dans l'eau sont dispersés dans l'eau avec un colorant ou un composé fluorescent qui ne portent pas de groupes copolymérisables et sont homo- ou copolymérisés en l'absence d'oxygène obtenue par polymérisation en émulsion en présence d'un initiateur soluble dans l'eau et forment des radicaux, mais sans addition d'un émulsifiant ou d'un stabilisateur.

2. Procédé selon la revendication 1, caractérisé en ce que, comme monomère difficilement soluble dans l'eau, on utilise une époxy contenant au moins une double liaison C = C (co) polymérisable, éventuellement en mélange avec d'autres monomères copolymérisables.

3. Procédé selon la revendication 2 caractérisé en ce que, comme époxy on utilise le 3,4-Epoxy butène 1, l'éther glycidyl-vinylique, le phtalate glycidyl-vinylique, l'acrylate glycidylique ou le methacrylate glycidylique.

4. Procédé selon l'une des revendications 1 à 3, caractérisé en ce que la polymérisation en émulsion s'effectue avec addition d'un réticulant divinylique.

5. Procédé selon l'une des revendications 1 à 4, caractérisé en ce que, comme colorant ou comme composé fluorescent, on utilise de la fluorescéine, de la rosamine, de la rhodamine, de la coumarine ou de l'acridine ou un dérivé de ces composés.

6. Procédé selon la revendication 1, caractérisé en ce que le coefficient de partage et la vitesse de diffusion du colorant ou du composé fluorescent entre la phase aqueuse et la phase organique sont modifiés au moyen d'un «catalyseur à transfert de phase».

7. Procédé selon l'une des revendications 1 à 6, caractérisé en ce que la concentration du colorant ou du composé fluorescent est de 0,05 à 1% en poids.

8. Procédé selon l'une des revendications 1 à 7, caractérisé en ce que, lors de la polymérisation en émulsion, le rapport des phases rapporté aux volumes est de 8:1 à 16:1.

9. Procédé selon l'une des revendications 1 à 8, caractérisé en ce que la concentration de l'initiateur est de 0,5 à 1,5 g/l.

10. Procédé selon l'une des revendications 1 à 9, caractérisé en ce que la concentration de l'époxy dans la phase monomère est de 1 à 100% en poids.

11. Procédé selon l'une des revendications 1 à 10, caractérisé en ce que la polymérisation en émulsion s'effectue pendant 5 à 40 heures, dans un domaine de température de 0 à 80°C.